# EUROPÄISCHE PATENTSCHRIFT

(11) **EP 2 487 100 B1**
(45) Veröffentlichungstag und Bekanntmachung des Hinweises auf die Patenterteilung: **04.08.2021**
(21) Anmeldenummer: 12000416.3
(22) Anmeldetag: 24.01.2012
(51) Int. Cl.: B62M 9/10, F16H 55/14

(54) **Dämpfungseinrichtung an einer Mehrfach-Kettenradanordnung**
Dampening device on a multiple chain wheel assembly
Dispositif d'amortissement sur un système de roue à chaîne multiple

(30) Priorität: 10.02.2011 DE 102011010855
(43) Veröffentlichungstag der Anmeldung: 15.08.2012
(73) Patentinhaber: SRAM Deutschland GmbH, 97424 Schweinfurt (DE)
(72) Erfinder: Braedt, Henrik, 97218 Gerbrunn (DE)

(56) Entgegenhaltungen:
- EP-A1- 2 165 927
- WO-A1-03/095867
- KR-A- 20060 062 511
- None

## Beschreibung

Die Erfindung betrifft eine Mehrfach-Ritzelanordnung mit einem Dämpfungselement zur Geräuschdämpfung an Rollenkettenantrieben von Fahrrädern.

Rollenkettenantriebe ohne die Möglichkeit der Gangumschaltung finden als Steuerketten in Verbrennungsmotoren von Kraftfahrzeugen Anwendung. Die Formgebung der Zähne bzw. Zahnzwischenräume ist im Wesentlichen durch DIN 8196-1 definiert. Im Betrieb von Steuerketten bestehen hohe Anforderungen in Hinsicht auf eine geringe Geräuschentwicklung, die infolge der großen Bewegungsgeschwindigkeit der Rollenkette einen Zusatzaufwand erfordern. Mit Mitteln zur Geräuschdämpfung wird gegen die Geräuschentwicklung angekämpft, wie zum Beispiel in der EP 1 943 443 gezeigt. Radial innerhalb der Laschen der an den Zähnen eines Ritzels angreifenden Rollenkette wird ein Gummiring angeordnet, der als Dämpfungselement wirkt. Die Laschen stützen sich radial nach innen am Gummiring ab, wobei sich der Gummiring wiederum an einem rohrförmigen Abschnitt des Ritzels abstützt, wenn er durch die Kettenlasche nach innen gedrückt wird. Der Innendurchmesser des Gummiringes ist größer als der rohrförmige Abschnitt des Ritzels, so dass es beim fortschreitenden Eingriff der Rollenkette an den Zähnen zu einer Bewegung des Gummiringes in radialer Richtung kommt.

Aus der EP 2 165 927 A1, welche die Präambel des Anspruchs 1 beschreibt, ist eine Mehrfach-Ritzelanordnung zur Montage an einem Hinterrad eines Fahrrades bekannt.

Aus dieser Anordnung ergibt sich jedoch, dass die Kettenlaschen in den Gummiring eingedrückt werden, wenn die Kettenröllchen im Bereich des Kettenauslaufs in den Lasttrum durch die antriebsseitige Kettenlast in den Lastflankenradius gedrückt werden. Daraus ergibt sich ein Wirkungsgradverlust des Antriebes, der jedoch für den Anwendungsbereich in Kraftfahrzeugen keine Rolle spielt.

In Fahrrädern werden Rollenketten in Verbindung mit Mehrfach-Ritzelanordnungen sowie mit vorderen und hinteren Kettenumwerfern zum Zweck der Gangumschaltung eingesetzt. Diese Antriebe stellen Rollenkettenantriebe dar, deren Zahnform von der DIN 8196-1 abweicht. Um bei Mehrfach-Ritzelanordnungen den Gangwechsel zu vereinfachen, werden die Zahnzwischenräume in Umfangsrichtung etwas weiter ausgeführt. Dabei entsteht zwischen Last- und Einlaufflankenradius ein Fußkreissegment. Der Fußkreisdurchmesser kann mit entsprechender Fußluft versehen werden, um die Position der Kettenrolle beim Einlaufen aus dem Leertrum festzulegen.

Bei Fahrradantrieben hat sich gezeigt, dass der ungedämpfte Aufschlag der Kette beim Einlauf der Kette auf das Ritzel zu folgenden Störeinflüssen führt:
d) Der Stoß beim Aufschlagen verursacht hohe Beschleunigungskräfte am einlaufseitigen Kettengliedende, wobei sich in diesem Bereich befindliche Schmierstoffe vom Kettenglied lösen. Weiterhin wird beim Auftreffen der Kettenrolle auf das Ritzel das radiale Spiel zwischen der Kettenrolle und dem Kragen an der Innenlasche der Kette einseitig herausgenommen, wobei das sich in diesem Volumen befindliche Schmiermittel ruckartig verdrängt wird.
e) Die Stöße beim Auftreffen der Kettenrollen führen zu Schwingungen, die im Leertrum auch zu für den Fahrer wahrnehmbaren Resonanzen führen können und sich negativ auf den Wirkungsgrad auswirken.
f) Das Aufschlagen der Kettenrollen verursacht Geräuschemissionen. Diese Geräuschemissionen können durch leichte und steife Antriebskomponenten zusätzlich verstärkt werden. Das ist zum Beispiel bei Mehrfach-Ritzelanordnungen der Fall, bei denen die Einzelritzel einstückig miteinander verbunden sind und eine hohle konische Tragstruktur vorliegt. Die konische Tragstruktur ist aus Gewichtsgründen dünnwandig ausgebildet, wie in der EP 1 972 541 gezeigt ist. Sie wird zu Schwingungen angeregt und wirkt in gewisser Weise wie ein Resonanzkörper, der Schall nach außen hin abstrahlt.

Die Aufgabe der Erfindung liegt nun darin, eine deutliche Reduktion der angesprochenen Störeinflüsse durch das Aufschlagen der Kettengliedenden im Leertrum zu erreichen. Gelöst wird diese Aufgabe durch die erfindungsgemäße Mehrfach-Ritzelanordnung nach Anspruch 1 bis 7, bei der beim Einlaufen der Kette auf das Ritzel die Kettenrolle nicht im Zahnzwischenraum aufschlägt, sondern die Kettenlasche auf einem Dämpfungselement auftrifft. Dabei kann vorteilhaft ausgenutzt werden, dass nur eine der zwei einen Zahnzwischenraum bildenden Zahnflanken als Lastflanke genutzt wird, während die Übertragung einer von der Antriebskette ausgehenden Antriebskraft an der entgegengesetzten Gegenflanke immer ausgeschlossen ist. Ein bei Fahrradantrieben üblicherweise im Kraftfluß zwischen Ritzel und angetriebener Nabenhülse angeordneter Freilauf ergibt diesen Effekt. Ein Dämpfungsring in Gestalt eines Gummiringes zur Abstützung der Kettengliederlaschen bildet das Dämpfungselement, wobei die Zahnkontur der keine Last übertragenden Gegenflanke zurück gesetzt wird.

Beim Ablaufen der Rollenkette vom Ritzel wird sichergestellt, dass die nacheinander aus der Verzahnung ausschwenkenden Kettenrollen mit der Zahnkontur im Eingriff sind, ohne dass das Dämpfungselement beteiligt ist.

Die Wirkungsweise der erfindungsgemäßen Lösung wird nun an einer bevorzugten Lösung beschrieben.
- Fig. 1: zeigt eine Gesamtansicht einer erfindungsbemäßen Mehrfach-Ritzelanordnung in Schnittdarstellung
- Fig. 2: ist eine Ansicht der erfindungsgemäßen Mehrfach-Ritzelanordnung nach Fig. 1 in Richtung der Mittelachse M.
- Fig. 3: ist eine schematische Darstellung der auf ein erfindungsgemäßes Ritzel auflaufenden Rolle einer Rollenkette.
- Fig. 4: ist eine schematische Darstellung eines Ritzels mit einer Gegenüberstellung der Gestaltung des Zahnzwischenraumes eines konventionellen Ritzels im Vergleich zur Gestaltung des erfindungsgemäßen Zahnzwischenraumes der Ritzelanordnung nach Fig. 1.
- Fig. 5: zeigt die Ansicht eines Ritzels mit einem anliegenden Dämpfungsring, von der Seite des größeren benachbarten Ritzels aus betrachtet.
- Fig. 6: zeigt die Ansicht eines Ritzels mit anliegendem Dämpfungsring von der Seite des kleineren benachbarten Ritzels, geschnitten durch den scheibenförmigen Abschnitt.

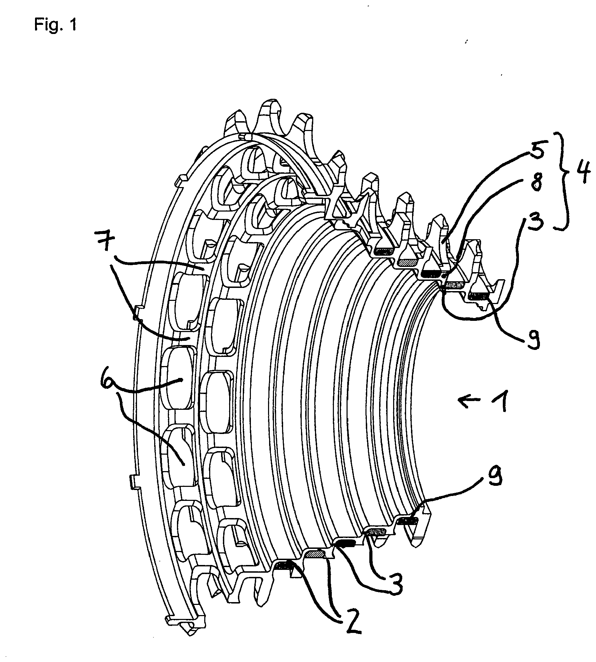

In der Fig. 1 ist die Mehrfach-Ritzelanordnung gezeigt, die über eine konische Tragstruktur 1 verfügt, die aus einer Aneinanderreihung von rohrförmigen Abschnitten 2 und scheibenförmigen Abschnitten 3 gebildet wird. Rohrförmige Abschnitte 2 und scheibenförmige Abschnitte ergeben einen treppenförmigen Verlauf. Die Zusammenfassung von einem scheibenförmigen Abschnitt 3 und Zähnen 5 an derselben axialen Position sowie einem zwischen diesen Zähnen 5 und dem rohrförmigen Abschnitt 2 angeordneten Zahnfußring 8 wird als Ritzel 4 aufgefasst. Der Zahnfußring 8 hat im Wesentlichen eine Erstreckung in axialer Richtung wie die Zähne 5 des betreffenden Ritzels 4.

Am äußeren Umfang der rohrförmigen Abschnitte 2 sind als Gummiringe ausgebildete Dämpfungsringe 9 angeordnet, deren Dicke in radialer Richtung etwa der radialen Erstreckung des jeweiligen Zahnfußrings 8 des benachbarten kleineren Ritzels entspricht. Die Gummiringe 9 haben eine Breite, die dem Zwischenraum zwischen den benachbarten Ritzeln 4 entspricht.

Die links in Fig. 1 dargestellten Bereiche der konischen Tragstruktur weisen eine größere Wandstärke auf und sind von Öffnungen 6 durchsetzt, wodurch Stege 7 zwischen den Ritzeln 4 gebildet werden. In diesem Bereich der Tragstruktur 1 sind beim bevorzugten Ausführungsbeispiel keine Gummiringe 9 vorgesehen. Ein Einsatz von Dämpfungsringen 9 in diesem Bereich ist auch möglich, wobei der Dämpfungseffekt dann geringer ausfällt.

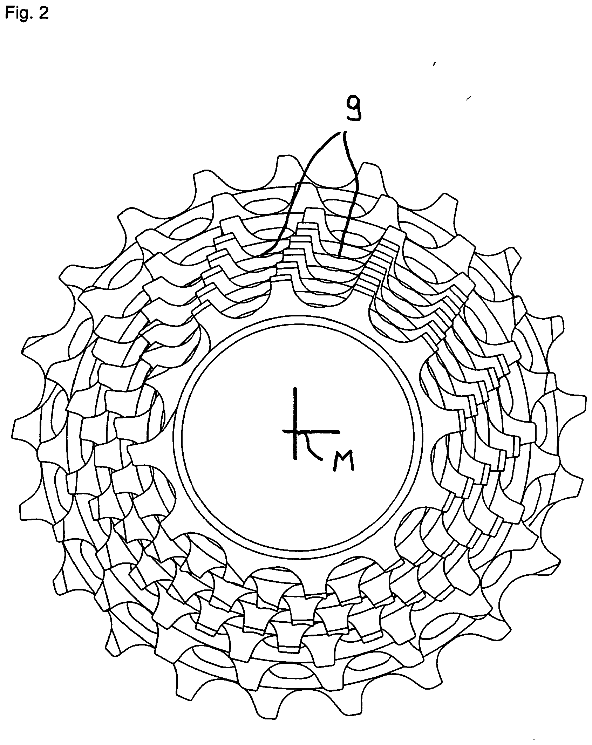

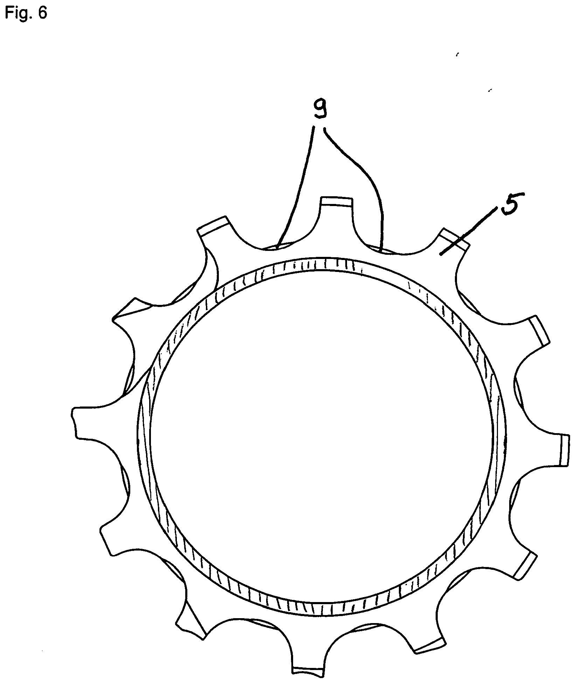

In der Ansicht senkrecht zu den Ritzeln 4 gemäß Fig. 2 sind kleine Bereiche der Gummiringe 9 in den Zahnzwischenräumen 16 zu sehen, wie auch in der Fig. 6, die ein Ritzel 4 zeigt.

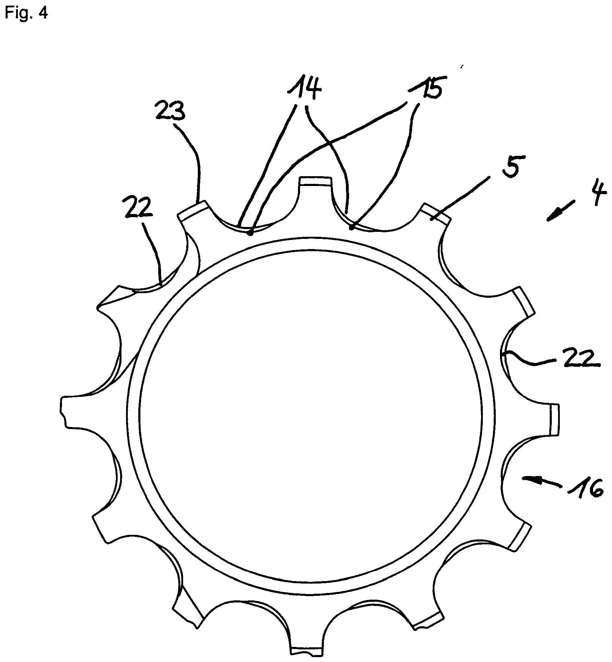

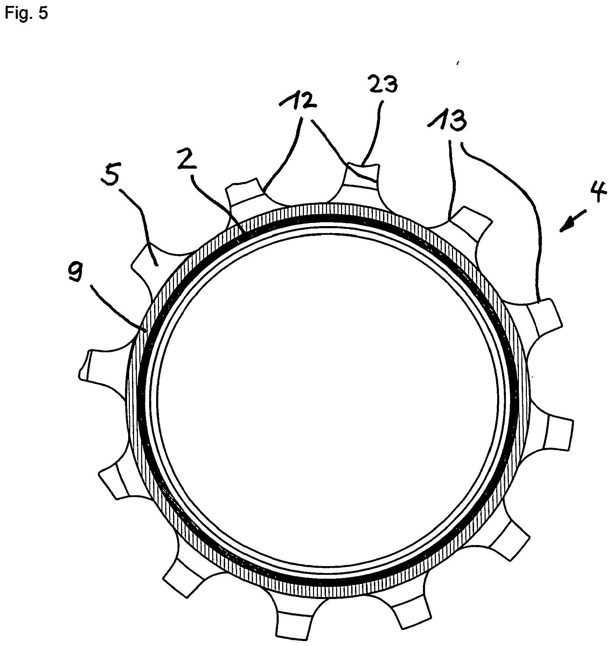

Die Fig. 5 zeigt das Ritzel 4 gemäß Fig. 4 von der Seite des benachbarten größeren Ritzels aus betrachtet.

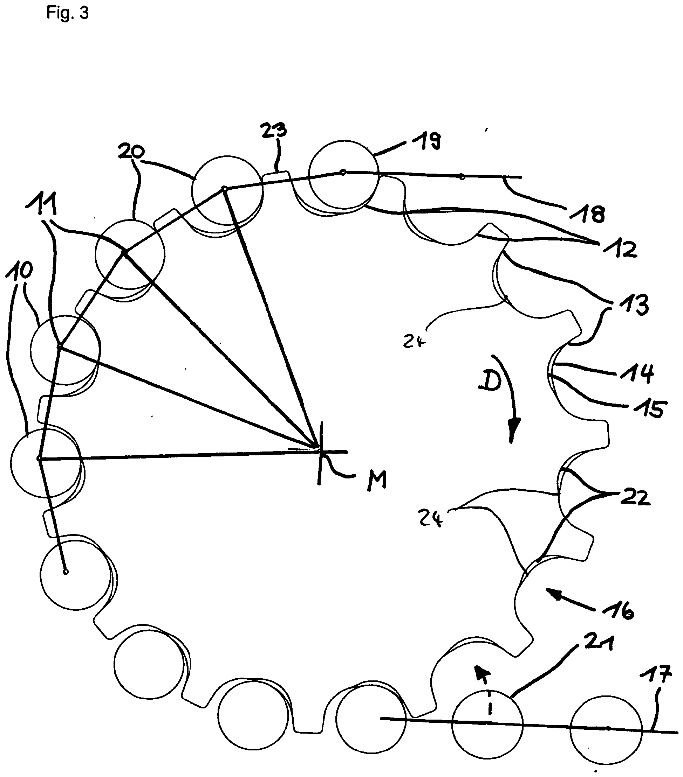

Der Fig. 3 ist zu entnehmen, wie die Zahnzwischenräume 16 gestaltet sind, ausgehend von einem konventionellen Ritzel mit konventionellem Zahnzwischenraum 14. Bei dieser Darstellung werden in schematischer Weise jeweils ein konventioneller Zahnzwischenraum 14 und ein erfindungsgemäßer Zahnzwischenraum 15 gezeigt, während die Position der Kettenrollen 10 den Kontaktverhältnissen zwischen Kettenrollen 10 und konventionellem Zahnzwischenraum 14 entspricht.

Im Allgemeinen wird bei der Konstruktion eines Ritzels für einen Fahrradantrieb von einem Polygon ausgegangen, das ein regelmäßiges Vieleck darstellt. Dabei entspricht die Anzahl der Zähne der Anzahl der gleichlangen Polygon-Seiten, und deren Seitenlänge entspricht der Kettenteilung. Die Polygonpunkte 11 entsprechen den Mittelpunkten der Kettenrollen 10 in einer gedachten Ausgangslage. Durch den Kontakt zwischen den Kettenrollen 10 und der Zahnkontur und durch das Wirken von Kettenzugskräften verschiebt sich die Position der Kettenrollen, unter Einhaltung der von den Kettenlaschen zwischen den Kettenrollen vorgegebenen Abstände.

Um die Peripherie der in der gedachten Ausgangslage befindlichen Kettenrollen 10 herum wird die Außenkontur des Ritzels konstruiert, unter Einrechnung eines Zwischenraumes in radialer Richtung, der als Fußluft bezeichnet wird. Damit wird den Kettenrollen 10 der Platz gegeben, den sie beim Einlauf der Kette im Leertrum 17 auf das Ritzel, als auch beim Ablaufen der Kette in den in Fig. 3 nur angedeuteten Lasttrum 18 vom Ritzel beanspruchen. Die Fußluft bei herkömmlichen Mehrfach-Ritzelanordnungen beträgt ca. 0,1 mm bis 0,3 mm, wobei die Fußluft am Auslauf der Lastflanke und am Auslauf der Gegenflanke im Wesentlichen identisch ist.

Die als nächste in den Lasttrum 18 einlaufende und vom Ritzel 4 ablaufende Kettenrolle 19 liegt an der Lastflanke 12 an, ebenso wie die entgegen der Drehrichtung D folgenden anliegenden Kettenrollen 20, die sich außerdem noch in den Zahnzwischenräumen 16 befinden. Entgegen der Drehrichtung D folgen mehrere Kettenrollen 10, die sich radial einwärts an der Zahnkontur im Zahnzwischenraum 16 abstützen.

Die als nächste aus dem Leertrum 17 einlaufende Kettenrolle 21, die in einen Zahnzwischenraum 16 einschwenken wird, findet ausreichenden Platz vor, weil der entsprechende Zahnzwischenraum 16 gegenüber der in der Ausgangslage befindlichen Kettenrolle 10 in der Umfangsrichtung verlängert ist und ein Fußkreissegment 24 vorliegt. Die einlaufende Kettenrolle 21 trifft am Ende ihrer Einschwenkbewegung in den Zahnzwischenraum 16 am Beginn der Gegenflanke 13 auf. Handelt es sich hier um einen konventionellen Zahnzwischenraum 14, kommt es zu einem Auftreffgeräusch, liegt ein erfindungsgemäßer Zahnzwischenraum 15 mit der Bildung einer Zahngrundaussparung 22 vor, in den bei Betrachtung in Richtung parallel zur Mittelachse M der Dämpfungsring

9 hineinragend zu erkennen ist. Es finden dann Stoßvorgänge unter Einbeziehung des Dämpfungsringes 9 statt, und die Geräuschentwicklung wird stark eingeschränkt.

Da die Geometrie der Zahnspitze 23 beibehalten wird, ergibt sich bei der erfindungsgemäßen Gegenflanke 13 eine steilere Flanke als an der Lastflanke 12. Der Winkel zwischen der radialen Richtung und der Zahnflanke wird dabei kleiner.

Da bei modernen Fahrradketten für Kettenschaltwerke die runden Endbereiche der Kettenlaschen in radialer Richtung über die jeweilige Kettenrolle vorstehen, treffen die Laschen auf dem Gummiring 9 auf. Als Nebeneffekt bei der erfindungsgemäßen Mehrfach-Ritzelanordnung tritt deshalb in Erscheinung, dass der den Zahnflanken anhaftende Ölfilm weniger durch die Kettenrollen verdrängt wird. Die Kettenlaschen schlagen auf dem Gummiring 9 auf, und nicht die Kettenrollen auf den Zahnflanken.

Als Abwandlung der beschriebenen Lösung kann auch eine Gummischicht direkt auf dem rohrförmigen Abschnitt 2 aufgebracht werden. Als Material könnte weiterhin ein Kunststoff eingesetzt werden, der über die entsprechenden Eigenschaften in Hinsicht auf Abriebfestigkeit, Verformbarkeit, Dämpfungsvermögen und Ölbeständigkeit verfügt.

Sind in der konischen Tragstruktur 1 im rohrförmigen Abschnitt 2 Öffnungen 6 vorhanden, dann kann auch ein Dämpfungsring 9 zur Anwendung kommen. Die Position des sich ergebenden Steges 7 ist dann zu modifizieren, damit sich die für die Umsetzung des erfindungsgemäßen Verfahrens maßgebenden Verhältnisse ergeben. Damit die radiale Außenfläche des Dämpfungsringes 9 auch in eine Zahngrundaussparung 22 ragen kann, wenn man die Ritzelanordnung in axialer Richtung parallel zur Achse M betrachtet, muß ein Steg in Umfangsrichtung in Richtung der Gegenflanke 13 verschoben positioniert werden.

Sind in einer Mehrfach-Ritzelanordnung die einzelnen Ritzel 4 nicht integraler Bestandteil einer hohlen konischen Tragstruktur, sondern separate Einzelteile, werden sie in axialer Richtung nebeneinander aufgereiht montiert. Die rohrförmigen Abschnitte 2 sind dann entweder mit dem Ritzel 4 einstückig verbunden, oder sie bilden separate rohrförmige Distanzstücke. Auch für die Ritzel von derartigen Ritzelanordnungen kann das erfindungsgemäße Dämpfungsverfahren angewandt werden.

Schließlich kann auch mit einem Dämpfungsring in abgeänderter Gestaltung die erfindungsgemäße Mehrfach-Ritzelanordnung verwirklicht werden. Dazu ist die Dicke des Dämpfungsringes in radialer Richtung an der Umfangsposition zu erhöhen, die sich am Auslauf der Gegenflanke befindet. Es ist klar, dass der Dämpfungsring 9 im Betrieb der Einrichtung in Umfangsrichtung gegenüber dem Zahn am Ritzel in Umfangsrichtung positioniert sein muss. Das ist durch geeignete Maßnahmen, wie zum Beispiel durch eine feste Verbindung mit dem rohrförmigen Abschnitt erreichbar.

### Bezuqszeichen

- 1: konische Tragstruktur
- 2: rohrförmiger Abschnitt
- 3: scheibenförmiger Abschnitt
- 4: Ritzel
- 5: Zahn
- 6: Öffnung
- 7: Steg
- 8: Zahnfußring
- 9: Dämpfungsring
- 10: Kettenrolle
- 11: Polygonpunkt
- 12: Lastflanke
- 13: Gegenflanke
- 14: konventioneller Zahnzwischenraum
- 15: erfindungsgemäßer Zahnzwischenraum
- 16: Zahnzwischenraum
- 17: Leertrum
- 18: Lasttrum
- 19: ablaufende Kettenrolle
- 20: anliegende Kettenrolle
- 21: einlaufende Kettenrolle
- 22: Zahngrundaussparung
- 23: Zahnspitze
- 24: Fußkreissegment

- D: Drehrichtung
- M: Mittelachse

## Patentansprüche

1. Mehrfach-Ritzelanordnung zur Montage an einem Hinterrad eines Fahrrades, **gekennzeichnet durch** eine Dämpfungseinrichtung zur Dämpfung der Stöße beim Einlaufen der Kettenglieder einer Rollenkette auf ein Ritzel (4) durch Verwendung eines Dämpfungselements, das dem Ritzel (4) zugeordnet ist und mit diesem rotiert, unter Vermeidung von Verlusten durch das Dämpfungselement beim Ablauf der Rollenkette von den Zähnen (5) des Ritzels (4) in den Zugtrum, wobei das Dämpfungselement in axialer Richtung seitlich an dem Ritzel (4) angeordnet ist und ausgebildet und ausgelegt ist, um beim Einlaufen der Rollenkette in die Zahnzwischenräume (16) am Ritzel (4), verbunden mit dem Einschwenken einer Folge von Kettengliedern, und um ein Auftreffen der Kettenrollen (10) in radialer Richtung und in Umfangsrichtung im Zahnzwischenraum (16) zu vermeiden und lediglich einen Kontakt der Kettenlaschen mit dem Dämpfungselement zu erlauben, während beim Auslaufen der Rollenkette aus den Zahnzwischenräumen (16) am Ritzel (4), verbunden mit dem Herausschwenken einer Folge von Kettengliedern und einem Aufheben des Kontaktes der Kettenrollen (10) in radialer Richtung und in Umfangsrichtung mit den Zähnen (5) des Ritzels (4), ein Kontakt der Bestandteile der Kettenglieder mit dem Dämpfungselement vermieden wird, wobei das Dämpfungselement von einem Dämpfungsring (9) aus gummielastischem Material gebildet wird und der Dämpfungsring (9) radial außerhalb eines rohrförmigen Abschnittes (2) in axialer Richtung seitlich am Ritzel (4) angeordnet ist.

2. Mehrfach-Ritzelanordnung nach Anspruch 1, wobei die Zahnzwischenräume (16) zwischen den Zähnen (5) am kleineren Ritzel (4) von einer Lastflanke (12) und einer Gegenflanke (13) begrenzt werden; **dadurch gekennzeichnet, dass** der Zahnzwischenraum (16) am Auslauf der Gegenflanke (13) gegenüber dem Zahnzwischenraum (16) am Auslauf der Lastflanke (12) nach radial innen versetzt ist und eine Zahngrundaussparung (22) bildet.

3. Mehrfach-Ritzelanordnung nach Anspruch 1 oder 2, mit einer in radialer Richtung gemessenen Dicke des Dämpfungsringes (9);
**dadurch gekennzeichnet, dass** die Dicke des Dämpfungsringes (9) an der Umfangs-Position des Auslaufs der Gegenflanke (13) größer ist, als an der Umfangs-Position des Auslaufs der Lastflanke (12).

4. Mehrfach-Ritzelanordnung nach Anspruch 1 oder 2, **dadurch gekennzeichnet, dass** das Ritzel (4) mit dem rohrförmigen Abschnitt (2) einstückig verbunden ausgebildet ist.

5. Mehrfach-Ritzelanordnung nach Anspruch 4, **dadurch gekennzeichnet, dass** mehrere benachbarte Ritzel (4) mit einem zwischen diesen Ritzeln (4) angeordneten rohrförmigen Abschnitten (2) einstückig ausgebildet sind und eine konische Tragstruktur (1) bilden.

6. Mehrfach-Ritzelanordnung nach Anspruch 1 oder 5 **dadurch gekennzeichnet, dass** der Außendurchmesser des rohrförmigen Abschnittes (2) an der Umfangs-Position des Auslaufs der Gegenflanke (13) größer ist, als an der Umfangs-Position des Auslaufs der Lastflanke (12).

7. Mehrfach-Ritzelanordnung nach Anspruch 4 oder 5, **dadurch gekennzeichnet, dass** im rohrförmigen Abschnitt (2) in Umfangsrichtung beabstandete Öffnungen (6) vorgesehen sind, wodurch Stege (7) zwischen den Ritzeln (4) entstehen, die sich in axialer Richtung ausgehend vom kleineren Ritzel (4) in der Richtung zum größeren Ritzel (4) erstrecken und sich an der Umfangs-Position des Auslaufs der Gegenflanke (13) am kleineren Ritzel (4) befinden.

## Claims

1. Multiple-sprocket assembly for mounting on a rear wheel of a bicycle, **characterized by** a damping installation for damping the shocks when chain links of a roller chain run onto a sprocket (4), by using a damping element which is assigned to the sprocket (4) and rotates conjointly with the latter, while avoiding losses on account of the damping element when the roller chain runs off the teeth (5) of the sprocket (4) into the load strand, wherein the damping element in the axial direction is disposed laterally on the sprocket (4) and, when the roller chain runs into the tooth intermediate spaces (16) on the sprocket (4), associated with the inward pivoting of a sequence of chain links, is configured and conceived to avoid the chain rollers (10) in the tooth intermediate space (16) impacting in the radial direction and in the circumferential direction and to only permit contact between the chain link plates and the damping element while, when the roller chain runs out of the tooth intermediate spaces (16) on the sprocket (4), associated with the outward pivoting of a sequence of chain links and the contact between the chain rollers (10) and the teeth (5) of the sprocket (4) in the radial direction and in the circumferential direction being cancelled, avoiding contact between the component parts of the chain links and the damping element, wherein the damping element is formed from a damping ring (9) of rubber-elastic material, and the damping ring (9) in the axial direction is disposed laterally on the sprocket (4) so as to be radially outside a tubular portion (2).

2. Multiple-sprocket assembly according to Claim 1, wherein the tooth intermediate spaces (16) between the teeth (5) on the smaller sprocket (4) are delimited by a load flank (12) and a counter flank (13), **characterized in that** the tooth intermediate space (16) at the runout of the counter flank (13) in relation to the tooth intermediate space (16) at the runout of the load flank (12) is offset in a radially inward manner and forms a tooth root clearance (22).

3. Multiple-sprocket assembly according to Claim 1 or 2, having a thickness of the damping ring (9) measured in the radial direction, **characterized in that** the thickness of the damping ring (9) at the circumferential position of the runout of the counter flank (13) is larger than at the circumferential position of the runout of the load flank (12).

4. Multiple-sprocket assembly according to Claim 1 or 2, **characterized in that** the sprocket (4) is configured so as to be integrally connected to the tubular portion (2).

5. Multiple-sprocket assembly according to Claim 4, **characterized in that** a plurality of adjacent sprockets (4) having a tubular portion (2) disposed between these sprockets (4) are integrally configured and form a conical support structure (1).

6. Multiple-sprocket assembly according to Claim 1 or 5, **characterized in that** the external diameter of the tubular portion (2) at the circumferential position of the runout of the counter flank (13) is larger than at the circumferential position of the runout of the load flank (12).

7. Multiple-sprocket assembly according to Claim 4 or 5, **characterized in that** openings (6) which are spaced apart in the circumferential direction are provided in the tubular portion (2), as a result of which webs (7) are created between the sprockets (4), said webs (7), proceeding in the axial direction from the smaller sprocket (4), extending in the direction towards the larger sprocket (4) and being situated at the circumferential position of the runout of the counter flank (13) on the smaller sprocket (4).

## Revendications

1. Système de pignons multiples destiné à être monté sur une roue arrière d'une bicyclette, **caractérisé par** un dispositif d'amortissement pour l'amortissement des chocs lors de l'entrée des maillons de chaîne d'une chaîne à rouleaux sur un pignon (4) en utilisant un élément d'amortissement, qui est associé au pignon (4) et tourne avec celui-ci, en évitant les pertes dues à l'élément amortisseur lors de la sortie de la chaîne à rouleaux des dents (5) du pignon (4) dans le brin de traction,
dans lequel l'élément d'amortissement est agencé latéralement sur le pignon (4) dans la direction axiale et est configuré et dimensionné pour, lors de l'entrée de la chaîne à rouleaux dans les espaces interdentaire (16) sur le pignon (4), associée au pivotement vers l'intérieur d'une série de maillons de chaîne, éviter que les rouleaux de chaîne (10) se heurtent dans la direction radiale et dans la direction circonférentielle dans l'espace interdentaire (16) et permettre uniquement un contact des composants de chaîne avec l'élément d'amortissement, tandis que lors de la sortie de la chaîne à rouleaux des espaces interdentaires (16) sur le pignon (4), associée au pivotement vers l'extérieur d'une série de maillons de chaîne et à une rupture du contact des rouleaux de chaîne (10) dans la direction radiale et dans la direction circonférentielle avec les dents (5) du pignon (4), un contact des constituants des composants de chaîne avec l'élément d'amortissement est évité, dans lequel l'élément d'amortissement est formé par une bague d'amortissement (9) en matériau élastique de caoutchouc, et
la bague d'amortissement (9) est agencée radialement à l'extérieur d'une section de forme tubulaire (2) dans la direction axiale latéralement sur le pignon (4).

2. Système de pignons multiples selon la revendication 1, dans lequel les espaces interdentaires (16) entre les dents (5) sur le plus petit pignon (4) sont délimités par un flanc de charge (12) et un contre-flanc (13) ;
**caractérisé en ce que** l'espace interdentaire (16) est décalé radialement vers l'intérieur sur la sortie du contre-flanc (13) par rapport à l'espace interdentaire (16) sur la sortie du flanc de charge (12), et forme une cavité de fond de dent (22).

3. Système de pignons multiples selon la revendication 1 ou 2, ayant une épaisseur de la bague d'amortissement (9) mesurée dans la direction radiale ; **caractérisé en ce que** l'épaisseur de la bague d'amortissement (9) à la position circonférentielle de la sortie du contre-flanc (13) est plus grande qu'à la position circonférentielle de la sortie du flanc de charge (12).

4. Système de pignons multiples selon la revendication 1 ou 2, **caractérisé en ce que** le pignon (4) est configuré relié d'un seul tenant avec la section de forme tubulaire (2).

5. Système de pignons multiples selon la revendication 4, **caractérisé en ce que** plusieurs pignons voisins (4) sont configurés d'un seul tenant avec une section de forme tubulaire (2) agencée entre ces pignons (4), et forment une structure porteuse conique (1).

6. Système de pignons multiples selon la revendication 1 ou 5, **caractérisé en ce que** le diamètre extérieur de la section de forme tubulaire (2) à la position circonférentielle de la sortie du contre-flanc (13) est plus grand qu'à la position circonférentielle de la sortie du flanc de charge (12).

7. Système de pignons multiples selon la revendication 4 ou 5, **caractérisé en ce que** des ouvertures (6) espacées dans la direction circonférentielle sont prévues dans la section de forme tubulaire (2), à travers lesquelles des entretoises (7) sont formées entre les pignons (4), qui s'étendent dans la direction axiale à partir du plus petit pignon (4) dans la direction du plus grand pignon (4) et se trouvent à la position circonférentielle de la sortie du contre-flanc (13) sur le plus petit pignon (4).
